# EUROPEAN PATENT APPLICATION

(11) **EP 3 160 134 A1**
(43) Date of publication of application: **26.04.2017**
(21) Application number: 14889780.4
(22) Date of filing: 29.08.2014
(51) Int. Cl.: H04N 5/74, G06F 3/14

(54) **WIRELESS PROJECTION SYSTEM AND WIRELESS PROJECTOR**

(30) Priority: 12.06.2014 CN 201410262016
(71) Applicant: Huizhou TCL Mobile Communication Co., Ltd., Huizhou, Guangdong 516006 (CN)
(72) Inventor: LUO, Minli, Huizhou Guangdong 516006 (CN)
(74) Representative: Office Kirkpatrick
(86) International application number: PCT/CN2014/085548
(87) International publication number: WO 2015/188467

(57) **Abstract**

A wireless projection system and a wireless projector are disclosed. The wireless projector comprises a WiFi screen-mirroring receiving module, a control module and a projector module. The WiFi screen-mirroring receiving module is configured to receive a wireless signal for WiFi screen-mirroring and transform the wireless signal into a first signal; and the control module is configured to obtain the first signal from the WiFi screen-mirroring receiving module and control the projector module to project a screen according to the first signal. In the aforesaid way, the present disclosure can achieve projection through WiFi screen-mirroring.

## Description

### FIELD OF THE INVENTION

The present disclosure generally relates to the field of projection technologies, and more particularly, to a wireless projection system and a wireless projector.

### BACKGROUND OF THE INVENTION

With advancement of the communication technologies, use of mobile phones becomes more and more popular. Because the mobile phones have screens of a relatively small size, users sometimes desire to project contents of the mobile phones onto a large screen so as to share the contents of the mobile phones with others.

Conventional projectors are connected to the mobile phones all in a wired way, e.g., via an HDMI cable or an MHL cable, and this makes it impossible for mobile phones which do not support HDMI or MHL outputs to project the contents by means of the projectors.

### SUMMARY OF THE INVENTION

Embodiments of the present disclosure provide a wireless projection system and a wireless projector, which can achieve projection through WiFi screen-mirroring.

A first aspect provides a wireless projector, which comprises a WiFi screen-mirroring receiving module, a control module and a projector module. The WiFi screen-mirroring receiving module is configured to receive a wireless signal for WiFi screen-mirroring and transform the wireless signal into a first signal; and the control module is configured to obtain the first signal from the WiFi screen-mirroring receiving module and control the projector module to project a screen according to the first signal. The WiFi screen-mirroring receiving module comprises: a first WiFi antenna, being configured to receive the wireless signal for WiFi screen-mirroring; a first WiFi chip connected with the first WiFi antenna, being configured to demodulate the wireless signal; and a multimedia processor connected with the first WiFi chip, being configured to decompress the demodulated wireless signal to generate the first signal. The projector module comprises a display interface adaptor chip, via which the controller is connected with the multimedia processor.

Preferably, the control module comprises: a controller, being configured to obtain the first signal from the multimedia processor and control the projector module to project the screen according to the first signal; and an LED drive chip connected with the controller, being configured to supply a drive voltage to the projector module.

Preferably, the projector module further comprises: an LED light source connected with the LED drive chip, being configured to produce a light source; a light ray collector connected with the LED light source, being configured to combine the light source into light rays of various colors; a micromirror connected with the light ray collector, being configured to obtain the light rays of colors from the light ray collector and reflect the light rays of colors; and a lens, being configured to obtain the light rays of colors from the micromirror to form an image according to the light rays of colors.

A second aspect provides a wireless projector, which comprises: a WiFi screen-mirroring receiving module, a control module and a projector module. The WiFi screen-mirroring receiving module is configured to receive a wireless signal for WiFi screen-mirroring and transform the wireless signal into a first signal; and the control module is configured to obtain the first signal from the WiFi screen-mirroring receiving module and control the projector module to project a screen according to the first signal.

Preferably, the WiFi screen-mirroring receiving module comprises: a first WiFi antenna, being configured to receive the wireless signal for WiFi screen-mirroring; a first WiFi chip connected with the first WiFi antenna, being configured to demodulate the wireless signal; and a multimedia processor connected with the first WiFi chip, being configured to decompress the demodulated wireless signal to generate the first signal.

Preferably, the control module comprises: a controller, being configured to obtain the first signal from the multimedia processor and control the projector module to project the screen according to the first signal; and an LED drive chip connected with the controller, being configured to supply a drive voltage to the projector module.

Preferably, the projector module comprises: an LED light source connected with the LED drive chip, being configured to produce a light source; a light ray collector connected with the LED light source, being configured to combine the light source into light rays of various colors; a micromirror connected with the light ray collector, being configured to obtain the light rays of colors from the light ray collector and reflect the light rays of colors; and a lens, being configured to obtain the light rays of colors from the micromirror to form an image according to the light rays of colors.

Preferably, the wireless projector further comprises a display interface adaptor chip, via which the controller is connected with the multimedia processor.

A third aspect provides a wireless projection system, which comprises a mobile terminal and a wireless projector, wherein: the mobile terminal comprises a processor, a second WiFi chip and a second WiFi antenna, the processor is configured to generate a wireless signal for WiFi screen-mirroring and transmit the wireless signal to the wireless projector via the second WiFi chip and the second WiFi antenna; the wireless projector comprises a WiFi screen-mirroring receiving module, a control module and a projector module, the WiFi screen-mirroring receiving module is configured to receive the wireless signal from the second WiFi antenna and transform the wireless signal into a first signal; and the control module is configured to obtain the first signal from the WiFi screen-mirroring receiving module and control the projector module to project contents of the mobile terminal according to the first signal.

Preferably, the WiFi screen-mirroring receiving module comprises: a first WiFi antenna, being configured to receive the wireless signal from the second WiFi antenna; a first WiFi chip connected with the first WiFi antenna, being configured to demodulate the wireless signal; and a multimedia processor connected with the first WiFi chip, being configured to decompress the demodulated wireless signal to generate the first signal.

Preferably, the control module comprises a controller, being configured to obtain the first signal from the multimedia processor and control the projector module to project the screen according to the first signal; and an LED drive chip connected with the controller, being configured to supply a drive voltage to the projector module.

Preferably, the projector module comprises: an LED light source connected with the LED drive chip, being configured to produce a light source; a light ray collector connected with the LED light source, being configured to combine the light source into light rays of various colors; a micromirror connected with the light ray collector, being configured to obtain the light rays of colors from the light ray collector and reflect the light rays of colors; and a lens, being configured to obtain the light rays of colors from the micromirror to form an image according to the light rays of colors.

Preferably, the wireless projection system further comprises a display interface adaptor chip, via which the controller is connected with the multimedia processor.

With the aforesaid technical solutions, the present disclosure has the following benefits: the WiFi screen-mirroring receiving module of the present disclosure receives the wireless signal for WiFi screen-mirroring and transforms the wireless signal into the first signal, and the control module obtains the first signal from the WiFi screen-mirroring receiving module and controls the projector module to project a screen according to the first signal, so the present disclosure can achieve projection through WiFi screen-mirroring.

### BRIEF DESCRIPTION OF THE DRAWINGS

To describe the technical solutions of embodiments of the present disclosure more clearly, the attached drawings necessary for description of the embodiments will be introduced briefly hereinbelow. Obviously, these attached drawings only illustrate some of the embodiments of the present disclosure, and those of ordinary skill in the art can further obtain other attached drawings according to these attached drawings without making inventive efforts. In the attached drawings:
FIG. 1 is a schematic structural view of a wireless projector according to a first embodiment of the present disclosure; and
FIG. 2 is a schematic structural view of a wireless projection system according to the first embodiment of the present disclosure.

### DETAILED DESCRIPTION OF THE INVENTION

Hereinbelow, the technical solutions of embodiments of the present disclosure will be described clearly and completely with reference to the attached drawings. Obviously, the embodiments described herein are only some of but not all of the embodiments of the present disclosure. All other embodiments that can be devised without making inventive efforts by those of ordinary skill in the art upon reviewing the embodiments of the present disclosure shall fall within the scope of the present disclosure.

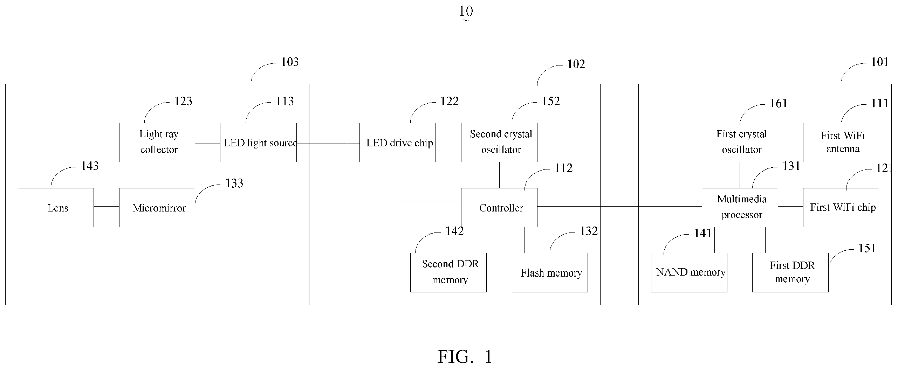

Referring to FIG. 1, FIG. 1 is a schematic structural view of a wireless projector according to a first embodiment of the present disclosure. As shown in FIG. 1, a wireless projector 10 disclosed in this embodiment comprises a WiFi screen-mirroring receiving module 101, a control module 102 and a projector module 103.

In this embodiment, the WiFi screen-mirroring receiving module 101 is configured to receive a wireless signal for WiFi screen-mirroring and transform the wireless signal into a first signal. The WiFi screen-mirroring technology is to compress a video and then transmit the compressed video through WiFi. The WiFi screen-mirroring receiving module 101 comprises a first WiFi antenna 111, a first WiFi chip 121 and a multimedia processor 131. The first WiFi antenna 111 is configured to receive the wireless signal for WiFi screen-mirroring; the first WiFi chip 121 is connected with the first WiFi antenna 111 and is configured to obtain the wireless signal from the first WiFi antenna 111 and demodulate the wireless signal; and the multimedia processor 131 is connected with the first WiFi chip 121 and is configured to obtain the demodulated wireless signal from the first WiFi chip 121 and decompress the demodulated wireless signal to generate the first signal. Preferably, the multimedia processor 131 decompresses the demodulated wireless signal to output the first signal according to the protocol standard of WiFi display.

The WiFi screen-mirroring receiving module 101 further comprises an NAND memory 141, a first DDR memory 151 and a first crystal oscillator 161. The NAND memory 141, the first DDR memory 151 and the first crystal oscillator 161 are all connected with the multimedia processor 131. The NAND memory 141 is configured to store software codes of the WiFi screen-mirroring receiving module 101, the first DDR memory 151 is configured to achieve dynamic storage during the operation of the WiFi screen-mirroring receiving module 101, and the first crystal oscillator 161 is configured to provide a system clock to the WiFi screen-mirroring receiving module 101.

In this embodiment, the control module 102 is configured to obtain the first signal from the WiFi screen-mirroring receiving module 101 and control the projector module 103 to project a screen according to the first signal. The control module 102 comprises a controller 112 and an LED drive chip 122, and the controller 112 is connected with the LED drive chip 122. The controller 112 is configured to obtain the first signal from the multimedia processor 131 and control the projector module 103 to project the screen according to the first signal; and the LED drive chip 122 is configured to supply a drive voltage to the projector module 103. That is, when the first signal is obtained by the controller 112, the controller 112 controls the LED drive chip 122 to supply a drive voltage to the projector module 103.

The control module 102 further comprises a Flash memory 132, a second DDR memory 142 and a second crystal oscillator 152. The Flash memory 132, the second DDR memory 142 and the second crystal oscillator 152 are all connected with the controller 112. The Flash memory 132 is configured to store initial software codes of the control module 102, the second DDR memory 142 is configured to achieve dynamic storage during the operation of the control module 102, and the second crystal oscillator 152 is configured to provide a system clock to the control module 102.

In this embodiment, the projector module 103 comprises an LED light source 113, a light ray collector 123, a micromirror 133 and a lens 143. The LED light source 113 is connected with the LED drive chip 122 and is configured to produce a light source, and the LED light source 113 produces the light source when the LED drive chip 122 outputs the drive voltage. The light ray collector 123 is connected with the LED light source 113 and is configured to combine the light source into light rays of various colors. The micromirror 133 is connected with the controller 112 and is configured to obtain the light rays of colors from the light ray collector 123 and reflect the light rays of colors. The lens 143 is configured to obtain the light rays of colors from the micromirror 133 to form an image according to the light rays of colors.

How the wireless projector 10 works will be described in detail hereinafter.

After the WiFi screen-mirroring receiving module 101 obtains the wireless signal via the first WiFi antenna 111, the first WiFi chip 121 demodulates the wireless signal, and the multimedia processor 131 decompresses the demodulated wireless signal to output the first signal according to the protocol standard of WiFi display.

After the control module 102 obtains the first signal, the controller 112 controls, according to the first signal, the LED drive chip 122 to supply the drive voltage to the LED light source 113 so that the LED light source 113 produces the light source, and the light ray collector 123 combines the light source into light rays of various colors. Meanwhile, the controller 112 controls, according to the first signal, the micromirror 133 to reflect the light rays of colors so that the lens 143 forms an image according to the light rays of colors, thereby achieving projection.

In other embodiments, a display interface adaptor chip can be provided between the controller 112 and the multimedia processor 131 by those of ordinary skill in the art so that the controller 112 is connected with the multimedia processor 131 via the display interface adaptor chip.

In the wireless projector 10 disclosed in this embodiment, the WiFi screen-mirroring receiving module 101 receives the wireless signal for WiFi screen-mirroring and transforms the wireless signal into the first signal, and the control module 102 thereof obtains the first signal from the WiFi screen-mirroring receiving module 101 and controls the projector module 103 to project a screen according to the first signal, so the wireless projector 10 can achieve projection through WiFi screen-mirroring.

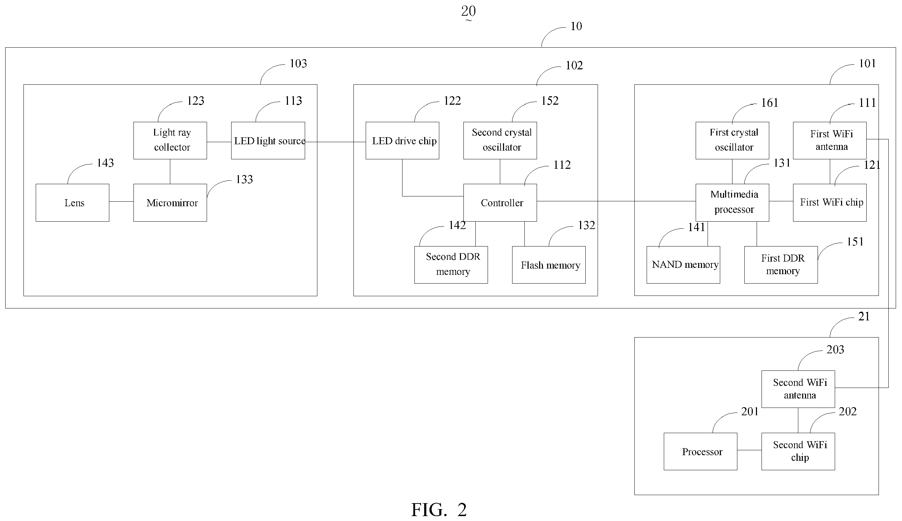

The present disclosure further provides a wireless projection system according to the first embodiment, which will be described based on the wireless projector 10 disclosed in the first embodiment. As shown in FIG. 2, the wireless projection system 20 disclosed in this embodiment comprises a mobile terminal 21 and the wireless projector 10.

In this embodiment, the mobile terminal 21 comprises a processor 201, a second WiFi chip 202 and a second WiFi antenna 203, the processor 201 is connected with the second WiFi chip 202, and the second WiFi chip 202 is connected with the second WiFi antenna 203. The processor 201 is configured to generate a wireless signal for WiFi screen-mirroring, i.e., the processor 201 generates a wireless signal for WiFi screen-mirroring according to the contents to be shared by the user; and the processor 201 transmits the wireless signal to the wireless projector 10 via the second WiFi chip 202 and the second WiFi antenna 203.

The wireless projector 10 receives the wireless signal from the second WiFi antenna 203 via the first WiFi antenna 111.

Preferably, the mobile terminal 21 is a mobile phone, a tablet computer or an ipad.

The mobile terminal 21 of the wireless projection system 20 of this embodiment generates the wireless signal for WiFi screen-mirroring, and the wireless projector 10 thereof transforms the wireless signal into the first signal and controls the projector module to project a screen according to the first signal, so the wireless projection system 20 can achieve projection through WiFi screen-mirroring. Moreover, it is unnecessary for the mobile terminal 21 to be additionally provided with an HDMI interface or an MHL interface, so the cost of the mobile terminal 21 is reduced.

What described above are only the embodiments of the present disclosure, but are not intended to limit the scope of the present disclosure. Any equivalent structures or equivalent process flow modifications that are made according to the specification and the attached drawings of the present disclosure, or any direct or indirect applications of the present disclosure in other related technical fields shall all be covered within the scope of the present disclosure.

## Claims

1. A wireless projector, comprising a WiFi screen-mirroring receiving module, a control module and a projector module, the WiFi screen-mirroring receiving module being configured to receive a wireless signal for WiFi screen-mirroring and transform the wireless signal into a first signal; and the control module being configured to obtain the first signal from the WiFi screen-mirroring receiving module and control the projector module to project a screen according to the first signal;
wherein the WiFi screen-mirroring receiving module comprises:
a first WiFi antenna, being configured to receive the wireless signal for WiFi screen-mirroring;
a first WiFi chip connected with the first WiFi antenna, being configured to demodulate the wireless signal; and
a multimedia processor connected with the first WiFi chip, being configured to decompress the demodulated wireless signal to generate the first signal;
and the projector module comprises:
a display interface adaptor chip, via which the controller is connected with the multimedia processor.

2. The wireless projector of claim 1, wherein the control module comprises:
a controller, being configured to obtain the first signal from the multimedia processor and control the projector module to project the screen according to the first signal; and
an LED drive chip connected with the controller, being configured to supply a drive
voltage to the projector module.

3. The wireless projector of claim 2, wherein the projector module further comprises:
an LED light source connected with the LED drive chip, being configured to produce a light source;
a light ray collector connected with the LED light source, being configured to combine the light source into light rays of various colors;
a micromirror connected with the light ray collector, being configured to obtain the light rays of colors from the light ray collector and reflect the light rays of colors; and
a lens, being configured to obtain the light rays of colors from the micromirror to form an image according to the light rays of colors.

4. A wireless projector, comprising a WiFi screen-mirroring receiving module, a control module and a projector module, the WiFi screen-mirroring receiving module being configured to receive a wireless signal for WiFi screen-mirroring and transform the wireless signal into a first signal; and the control module being configured to obtain the first signal from the WiFi screen-mirroring receiving module and control the projector module to project a screen according to the first signal.

5. The wireless projector of claim 4, wherein the WiFi screen-mirroring
receiving module comprises:
a first WiFi antenna, being configured to receive the wireless signal for WiFi screen-mirroring;
a first WiFi chip connected with the first WiFi antenna, being configured to demodulate the wireless signal; and
a multimedia processor connected with the first WiFi chip, being configured to decompress the demodulated wireless signal to generate the first signal.

6. The wireless projector of claim 5, wherein the control module comprises:
a controller, being configured to obtain the first signal from the multimedia processor and control the projector module to project the screen according to the first signal; and
an LED drive chip connected with the controller, being configured to supply a drive voltage to the projector module.

7. The wireless projector of claim 6, wherein the projector module comprises:
an LED light source connected with the LED drive chip, being configured to produce a light source;
a light ray collector connected with the LED light source, being configured to combine the light source into light rays of various colors;
a micromirror connected with the light ray collector, being configured to obtain the light rays of colors from the light ray collector and reflect the light rays of colors; and
a lens, being configured to obtain the light rays of colors from the micromirror to form an image according to the light rays of colors.

8. The wireless projector of claim 6, further comprising a display interface adaptor chip, via which the controller is connected with the multimedia processor.

9. A wireless projection system, comprising a mobile terminal and a wireless projector, wherein:
the mobile terminal comprises a processor, a second WiFi chip and a second WiFi antenna, the processor being configured to generate a wireless signal for WiFi screen-mirroring and transmit the wireless signal to the wireless projector via the second WiFi chip and the second WiFi antenna;
the wireless projector comprises a WiFi screen-mirroring receiving module, a control module and a projector module, the WiFi screen-mirroring receiving module being configured to receive the wireless signal from the second WiFi antenna and transform the wireless signal into a first signal; and the control module being configured to obtain the first signal from the WiFi screen-mirroring receiving module and control the projector module to project contents of the mobile terminal according to the first signal.

10. The wireless projection system of claim 9, wherein the WiFi screen-mirroring receiving module comprises:
a first WiFi antenna, being configured to receive the wireless signal from the second WiFi antenna;
a first WiFi chip connected with the first WiFi antenna, being configured to demodulate the wireless signal; and
a multimedia processor connected with the first WiFi chip, being configured to decompress the demodulated wireless signal to generate the first signal.

11. The wireless projection system of claim 10, wherein the control module comprises:
a controller, being configured to obtain the first signal from the multimedia processor and control the projector module to project the screen according to the first signal; and
an LED drive chip connected with the controller, being configured to supply a drive voltage to the projector module.

12. The wireless projection system of claim 11, wherein the projector module further comprises:
an LED light source connected with the LED drive chip, being configured to produce a light source;
a light ray collector connected with the LED light source, being configured to combine the light source into light rays of various colors;
a micromirror connected with the light ray collector, being configured to obtain the light rays of colors from the light ray collector and reflect the light rays of colors; and
a lens, being configured to obtain the light rays of colors from the micromirror to form an image according to the light rays of colors.

13. The wireless projection system of claim 11, further comprising a display interface adaptor chip, via which the controller is connected with the multimedia processor.
